# EUROPEAN PATENT SPECIFICATION

(11) **EP 0 375 445 B1**
(45) Date of publication and mention of the grant of the patent: **09.03.1994**
(21) Application number: 89313479.1
(22) Date of filing: 21.12.1989
(51) Int. Cl.: C09J 109/10, C09J 133/06, C08F 236/10, C08F 220/12

(54) **Adhesive composition**
Klebemischung
Composition adhésive

(30) Priority: 21.12.1988 US 287377
(43) Date of publication of application: 27.06.1990
(73) Proprietor: EXXON RESEARCH AND ENGINEERING COMPANY, Florham Park, New Jersey 07932-0390 (US)
(72) Inventor: Agarwal, Pawan Kumar, Bridgewater New Jersey 08807 (US); Thaler, Warren Alan, Flemington New Jersey 08822 (US)
(74) Representative: Fletcher Watts, Susan J.

(56) References cited:
- US-A- 4 359 547
- US-A- 4 483 960

## Description

This invention relates to emulsion type adhesive compositions.

Broadly speaking, synthetic adhesives used in packaging can be classified into four categories: water-based emulsion system, solvent-based, reactive and hot melt adhesives. Of these four, currently the water-based are used most extensively. Usually the water-based adhesives are based on emulsion polymers and are applied to porous cellulosic substrates. Energy from the outside in some fashion is applied to the system to evaporate the water in order that a strong bond may be formed.

With the solvent-based adhesives usually a good wetting is achieved; however, their use has been becoming extremely restrictive due to expensive energy requirements for the evaporation of organic solvents, fire hazards associated with the use of these organic solvents and emissions problems with said solvents. The strict government environmental regulations and restrictions concerning worker's exposure to solvent vapors, etc. has placed extra pressure on the packager to use non-solvent based adhesives.

The hot melt adhesives are generally applied (as the name implies) by conventional extrusion or coating techniques in the temperature range of 250 to 450°C on one of the surfaces to be bonded. The other surface is brought in contact with the hot surface for a sufficient period of time for the melt to cool, where upon solidification, a strong and durable bond is formed.

As a result of various local and federal safety and environmental regulations, the polymers adhesive industry is moving from solvent to water-based technology. Usually the water-based pressure sensitive adhesives are based on emulsion polymers and applied to porous cellulosic substrates. Energy is applied to the system to evaporate the water in order to form a strong bond. The key requirement of such an emulsion is that it form a uniform coating having good adhesive (tack) and cohesive characteristics. The degree of the adhesive and cohesive strength of the final adhesive product is established by its end use. For example, for general label applications, it is desired that the product have aggressive tack and not so much cohesive strength. However, for general tape uses, the composition should have good cohesive strength with marginal tack properties.

Currently in the market, there are very limited emulsion polymers available for water-based adhesives. A few acrylic polymer emulsions are available which are suitable for label applications but these are relatively expensive. There is not a single water-based polymeric adhesive available in the market which meets the requirements for tape applications, especially the tapes desired by the automotive painting industry.

In U.S. Patent 4,483,960 emulsion type adhesives are disclosed in which certain metal or amine neutralized sulfonated copolymers are employed. In U.S. Patent 4,359,547 pressure sensitive adhesive compositions are disclosed employing certain amine terminated polyalkylene oxide neutralized sulfonated polymers.

The present invention provides a water-based emulsion pressure sensitive adhesive emulsion composition comprising:
(a) a metal neutralized sulfonated co- or terpolymer of (i) at least one conjugated diene containing 4 to 12 carbon atoms and (ii) an ethoxylated alkylamine salt of a styrene sulfonate having the formula: 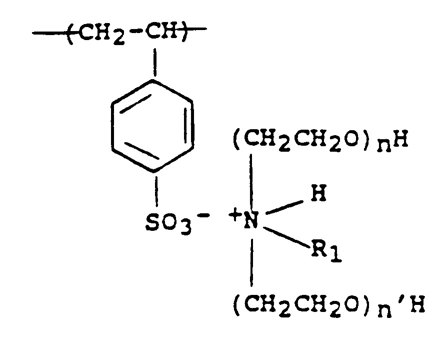 wherein n + n' is 3 to 50 and R₁ is an alkyl group having 10 to 30 carbon atoms; the sulfonated co- or terpolymer comprising at least 80 wt.% of said conjugated diene(s) and having 5 to 125 meq. of sulfonated groups per 100g; and
(b) 20 to 300 parts by weight of a hydrocarbon tackifying resin based on a petroleum or coal tar distillate per 100 parts by weight of said sulfonated elastomeric co- or terpolymer.

Preferably, n + n' is 3 to 15 and more preferably 3 to 5. Preferably R₁ is an alkyl group having 12 to 24, and more preferably 12 to 18, carbon atoms.

The said co- or terpolymer is water insoluble, preferably having 0.2 weight percent sulfur to 6 weight percent sulfur chemically combined. Advantageously the said co- or terpolymer is sodium neutralized.

Reference hereinafter to copolymer in connection with the invention includes terpolymer.

A preferential plasticizer, such as an ionic preferential plasticizer, may optionally be added to the adhesive composition, typically in an amount up to about 25 parts per 100 parts of the sulfonated copolymer. An oil and/or a filler may also be added to the composition, thereby modifying the properties of the emulsion type adhesive composition.

The copolymerization of hydrocarbon monomers like butadiene or isoprene with a water soluble monomer like sodium styrene sulfonate is complicated by the mutual insolubility of the comonomers. Despite this, copolymers have been produced and are useful as pressure sensitive adhesives. However, the styrene sulfonate is consumed early in the polymerization, and the sulfonate content decreases with conversion. The resultant polymers are blocky and nonuniform in styrene sulfonate.

The use of oil soluble amine salts of styrene sulfonate is very effective for compatibilizing the comonomer; however the emulsions are of poor quality and low stability. Furthermore, post polymerization regeneration of the sodium sulfonate by addition of a base such as sodium hydroxide leaves a fatty amine residue which is deleterious to the product.

We have found that ethoxylated long chain amine salts of styrene sulfonic acid are excellent comonomers having both good compatibility with hydrocarbon monomers and good surfactancy. Furthermore, regeneration of a metal sulfonate after polymerization releases the ethoxylated amine which is also a good surfactant. The resulting emulsions can be formulated into good pressure sensitive adhesives.

In general, the conjugated diene and sulfonate containing monomer are dispersed in a water phase in the presence of a water soluble initiator or a redox system which has one component soluble in the oil phase and one component soluble in the water phase, and either with or without surfactant, wherein the temperature is sufficient to initiate polymerization. To the resultant latex is added a tackifier resin and the emulsion is doctor bladed onto a substrate and dried at room or elevated temperature to form the adhesive film.

The copolymers formed from the free radical emulsion copolymerization process can be generally described as having an Mₙ as measured by GPC of 1000 to 1,000,000, more preferably 10,000 to 100,000. The copolymers preferably contain 0.2 to 6 weight percent of the chemically combined sulfur, more preferably 0.5 to 4 and most preferably 0.5 to 3.0 weight percent sulfur. The copolymers are water soluble, substantially gel free, thermally stable and oxidatively stable. Typically, the copolymerization of any conjugated diene as so defined herein, can be readily copolymerized with the sulfonate containing monomer as is defined herein. Terpolymers with styrene, acrylonitrile, vinyl chloride, as the termonomers with the aforementioned dienes, are also contemplated provided that no more than 25 weight percent of the termonomer is combined therein.

The conjugated dienes may be generally defined as acyclic or cyclic conjugated dienes containing from 4 to 12, preferably 4 to 10 carbon atoms more preferably 4 to 6 carbon atoms. Typical, but non-limiting examples of acyclic conjugated dienes are 1,3-butadiene, isoprene (2-methyl-1,3-butadiene), 2,3-dimethyl-1,3-butadiene, 1,3-pentadiene, 2-methyl-1,3-pentadiene, 2,3-dimethyl-1,3-pentadiene, 3-methyl-1,3-pentadiene, 2-phenyl butadiene, chloroprene and piperidene. Typical, but non-limiting examples of cyclic conjugated dienes are cyclopentadiene and methyl cyclopentadiene. The preferred conjugated dienes are acyclic and more preferably are selected from 1,3-butadiene, isoprene and chloroprene. In the formation of the sulfonate containing copolymer, one copolymerizes one of the aforementioned conjugated dienes with the sulfonate containing monomer. Sulfonate containing terpolymers can be readily formed by copolymerizing the sulfonate containing monomer with a mixture of two of the above identified conjugated dienes. Combinations of butadiene and isoprene are particularly desirable since isoprene provides good tack and butadiene lower cost.

The surfactants employed for this invention are varied and well-known in the art. The typical emulsifiers or surfactants can be employed, however, some are more effective than others in generating latexes of better stability. A preferred emulsifier is sodium lauryl sulfate. This copolymerization can also be conducted without emulsifier because of the surfactancy of the sulfonate monomer.

Buffering agents can be employed in the instant polymerization process and are selected from the group consisting of sodium carbonate, ammonia, sodium acetate, trisodium phosphate etc. When utilized, these buffering agents are employed at a concentration of 0.1 to 5 grams per 100 grams water employed in the emulsion system.

Chain transfer agents can be readily employed in the instant polymerization process for controlling the molecular weight of the resultant copolymer. The concentration of chain transfer agent is from 0 to 1.0 grams per 100 grams of the combined weight of the sulfonate containing monomer and the conjugated diene.

The free radical emulsion copolymerization of the sulfonate monomer and the conjugated diene yields a stable latex, wherein the resultant water insoluble copolymer is not covalently cross-linked and possesses substantial ionic crosslinking, and preferably has 0.2 to 6 weight percent of chemically combined sulfur, more preferably 0.5 to 4. To the resultant latex is added the tackifier resin to form the emulsion type adhesive composition. Generally it is desirable to add a metallic base to generate the metal sulfonate.

To the emulsion of the metal neutralized sulfonated elastomeric copolymer is added a commercial tackifying resin preferably having a softening point of 0°C to 160°C, more preferably 50°C to 140°C and most preferably 70°C to 120°C. A variety of commercial tackifier resins are available. Some of these resins contain α and/or β pinene or rosin derivatives as the base ingredient, while others are derived from the polymerization of petroleum or coal distillates which consist of aliphatic dienes, mono- and diolefins and cyclic olefins having 5 to 6 carbon atoms. The latter type of tackifiers have primarily piperyline and/or isoprene structure. A general but excellent description of tackifying resins derived from petroleum derivatives can be found in, for example, Encyclopedia of Polymer Science and Technology Vol. 9. pages 853 to 860, chapter by John Findlay, published by John Wiley & Sons, NY (1968).

Typical but non-limiting tradenames of these commercial tackifiers are Wingtack of Goodyear, Escorez of Exxon, Piccolyte of Hercules and Zonarez of Arizona Chemicals. Recently, these and various other companies have also started marketing relatively higher softening point resins. These are generally modified aliphatic hydrocarbon resins and/or hydrogenated polycyclics. The physical appearance of these commercial tackifying resins varies, depending upon their softening point, they can be either viscous liquids or light-coloured solids at room temperature. Most often, their initial colour (Gardner) is 3.0 to 7.0 and the density from 0.7 to 1.0 gm/cm³ at room temperature. The acid number of these resins is usually less than 1. In general, the molecular weight of these commercial tackifying resins is not homogenous, the number average molecular weight Mₙ, as measured by GPC, can be from 300 to 5000, and more preferably 500 to 2000, and most preferably 700 to 1600.

As well-known to those familiar with the use of tackifying resins, because of their wide range compatibility, any of can be used with sulfonated polymers in proper formulation, which will yield adhesive systems of varying physical characteristics. To cite an example in the present invention, the tackifying resins used are those based on hydrocarbon resins.

These hydrocarbon tackifier resins are incorporated into the emulsion type adhesive composition at 20 to 300 parts by weight per 100 parts by weight of the metal neutralized sulfonated copolymer, preferably 25 to 250, more preferably a 25 to 200 and most preferably 50 to 200.

In forming the emulsion type adhesive composition of the metal neutralized sulfonated elastomeric copolymer, the tackifier resin can be dissolved in a hydrocarbon solvent such as toluene at a concentration level of 1 to 50 grams per 100 ml. of solvent, for example 10 grams. The solution of tackifier resin is added to the emulsion of the neutralized sulfonated copolymer and vigorously mixed to form the emulsion type adhesive composition.

The emulsion of the neutralized sulfonated elastomeric copolymer may be doctor bladed to the required thickness onto a substrate and the formed adhesive film may be dried at room temperature or elevated temperature either under vacuum or at atmospheric pressure for a sufficient period of time in order to remove the water from the adhesive film.

Most preferably the drying or fusion temperature of the emulsion layer of the neutralized sulfonated elastomeric copolymer and the hydrocarbon tackifying resin is 50 to 250°C and the time of drying or fusion is 10 seconds to 10 minutes, wherein the drying or fusion is preferably conducted at the temperature of greater than 50°C for at least 30 seconds. The thickness of the adhesive layer formed by the drying or fusion of the emulsion layer of the sulfonated copolymer and the hydrocarbon tackifying resin is preferably 2.54 to 254 µm (0.1 to 10 mil). Typical substrates, upon which the emulsion layer can be deposited on one or both of the surfaces of the substrate to form an article such as a pressure sensitive tape, are plasticized polyvinylchloride, mylar, cellulose acetate, polyethylene, polypropylene and paper.

As exemplified in the following illustrative examples, a series of emulsion type adhesive compositions were prepared.

### Example 1

### Preparation of Emulsion Copolymer

An emulsion copolymerization was carried out by combining 98 g water, 5.88 g sodium styrene sulfonate, 12.2 g Ethomeen c/15, 2.86 g HCl solution, 1.56 g Dodecyl mercaptan, 0.244 g potassium persulfate, and 66.6 g Isoprene. The combination was heated and agitated at 65°C. The product was stabilized with 2.26 g of a shortstop solution (8 g hydroquinone and 12 g BHT/liter methanol). The sodium salt was generated by the addition of 4.58 g 50% NaOH solution.

### Example 2

### Formulation of Copolymer with Escorez Resin

The emulsion from Example 1 containing 45.5% solids was blended with Escorez 1310 (58.3% solids) on a 1:1 solids basis using 20 ml of 1310 emulsion and 25.6 ml of Example 1 emulsion. Samples were cast within 20 minutes of mixing.

### Example 3

### Preparation of Adhesives

Desired quantities of emulsion were cast on 381 µm (1.5 mil) thick mylar film using an adhesive drawdown blade. Wet adhesive film thickness was determined such that dry adhesive film was 254 to 381 µm (1.0 - 1.5 mil) thick. The adhesive was dried and polymer and resin fused by exposure to 100°C for two minutes. Appropriate test specimens were then prepared, and standard pressure sensitive adhesive tests were run.

| Sample (Exp 2)^{a} | 180°Peel | 90°Peel | Rolling Ball | Polyken | Hold to Steel |
|---|---|---|---|---|---|
| 381 µm (1.5 mil) | 0.77 kg (1.7 lbs.) | 0.50 kg (1.1 lbs.) | 1.3 cm | 493 | -- |
| 254 µm (1.0 mil) | 0.45 kg (1.0 lbs.) | 0.32 kg (0.7 lbs.) | 1.7 cm | 254 | 25.8 |

| | | | | | |
|---|---|---|---|---|---|
| a: Excellent drawdown, excellent peel test, no adhesive transfer or tracking. | | | | | |

## Claims

1. A water-based pressure sensitive adhesive emulsion composition, comprising:
(a) a metal neutralised sulfonated co- or terpolymer of (i) at least one conjugated diene containing 4 to 12 carbon atoms and (ii) an ethoxylated alkylamine salt of a styrene sulfonate having the formula : 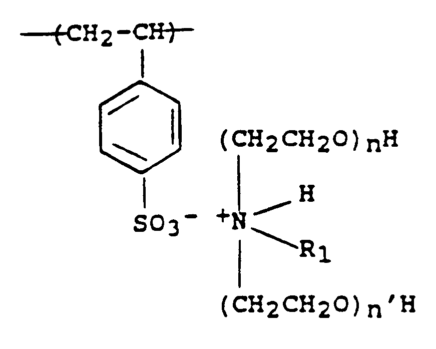 wherein n + n' is 3 to 50 and R₁ is an alkyl group having 10 to 30 carbon atoms; the sulfonated co- or terpolymer comprising at least 80 wt.% of said conjugated diene(s) and having 5 to 125 meq. of sulfonated groups per 100g; and
(b) 20 to 300 parts by weight of a hydrocarbon tackifying resin based on a petroleum or coal tar distillate per 100 parts by weight of said sulfonated elastomeric co- or terpolymer.

2. An adhesive composition according to claim 1, wherein the or each conjugated diene is selected from 1,3-butadiene, isoprene or chloroprene.

3. An adhesive composition according to claim 1, wherein said conjugated diene is isoprene.

4. An adhesive composition according to any preceding claim, wherein R₁ is C₁₂ to C₂₄.

5. An adhesive composition according to any preceding claim wherein n + n' is 3 to 15.

6. An adhesive composition according to any preceding claim, wherein the co- or terpolymer has from 0.2 to 6 wt.% of chemically combined sulfur.

7. A method of preparing a pressure sensitive adhesive article, comprising applying to a substrate a film of an adhesive composition according to any preceding claim and removing water therefrom.

8. A method according to claim 7, wherein the film is from 2.54 to 254 µm (0.1 to 10 mil) thick.

9. A method according to claim 7 or claim 8, wherein the substrate is selected from plasticized polyvinylchloride, mylar, cellulose acetate, polyethylene, polypropylene and paper.

## Patentansprüche

1. Kontaktklebstoffemulsionszusammensetzung auf wäßriger Basis, die
(a) ein metall-neutralisiertes sulfoniertes Co- oder Terpolymer aus (i) mindestens einem konjugierten Dien, das 4 bis 12 Kohlenstoffatome enthält, und (ii) einem ethoxylierten Alkylaminsalz eines Styrolsulfonats mit der Formel: 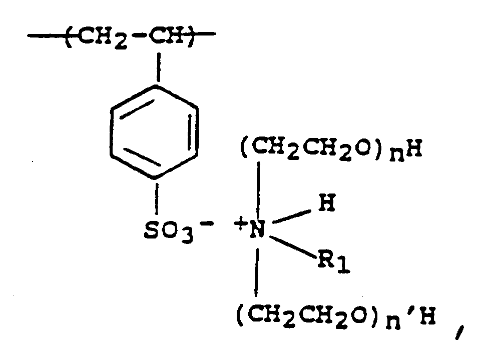 in der n + n' 3 bis 50 sind und R₁ eine Alkylgruppe mit 10 bis 30 Kohlenstoffatomen ist, wobei das sulfonierte Co- oder Terpolymer mindestens 80 Gew.-% dieses konjugierten Diens oder dieser konjugierten Diene umfaßt und 5 bis 125 Milligrammäquivalente an sulfonierten Gruppen pro 100 g aufweist, und
(b) 20 bis 30 Gewichtsteile eines klebrigmachenden Kohlenwasserstoffharzes auf Basis eines Erdöl- oder Kohleteerdestillats pro 100 Gewichtsteile an sulfoniertem, elastomerem Co- oder Terpolymer umfaßt.

2. Klebstoffzusammensetzung nach Anspruch 1, in der das oder jedes konjugierte Dien aus 1,3-Butadien, Isopren oder Chloropren ausgewählt ist.

3. Klebstoffzusammensetzung nach Anspruch 1, in der das konjugierte Dien Isopren ist.

4. Klebstoffzusammensetzung nach einem der vorangehenden Ansprüche, in der R₁ C₁₂ bis C₂₄ ist.

5. Klebstoffzusammensetzung nach einem der vorangehenden Ansprüche, in der n + n' 3 bis 15 sind.

6. Klebstoffzusammensetzung nach einem der vorangehenden Ansprüche, in der das Co- oder Terpolymer 0,2 bis 6 Gew.-% chemisch gebundenen Schwefel enthält.

7. Verfahren zur Herstellung eines selbstklebenden Gegenstands, bei dem ein Film aus einer Klebstoffmischung nach einem der vorangehenden Ansprüche auf ein Substrat aufgebracht und das Wasser daraus entfernt wird.

8. Verfahren nach Anspruch 7, bei dem der Film 2,54 bis 254 µm (0,1 bis 10 mil) dick ist.

9. Verfahren nach Anspruch 7 oder Anspruch 8, bei dem das Substrat aus weichgemachtem Polyvinylchlorid, Mylar, Celluloseacetat, Polyethylen, Polypropylen und Papier ausgewählt wird.

## Revendications

1. Composition d'émulsion à base d'eau adhésive sensible à la pression comprenant :
(a) un co- ou terpolymère sulfoné neutralisé par un métal et constitué (i) d'au moins un diène conjugué contenant 4 à 12 atomes de carbone et (ii) d'un sel d'alkylamine éthoxylé d'un styrène sulfonate ayant pour formule : 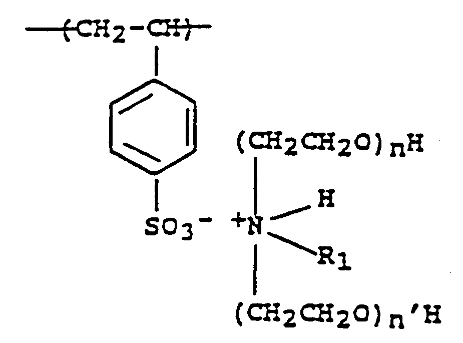 dans laquelle la somme n + n' est égale à 3 à 50 et R₁ est un groupe alkyle ayant 10 à 30 atomes de carbone, le co- ou terpolymère sulfoné comprenant au moins 80 % en poids dudit ou desdits diènes conjugués et ayant 5 à 125 méq. de groupes sulfonés par 100 g, et
(b) 20 à 300 parties en poids d'une résine adhésive hydrocarbonée à base de distillat de pétrole ou de goudron de houille par 100 parties en poids dudit co- ou terpolymère élastomère sulfoné.

2. Composition adhésive selon la revendication 1, dans laquelle le ou chaque diène conjugué est choisi parmi le 1,3-butadiène, l'isoprène ou le chloroprène.

3. Composition adhésive selon la revendication 1, dans laquelle ledit diène conjugué est l'isoprène.

4. Composition adhésive selon l'une quelconque des revendications précédentes dans laquelle R₁ est un groupe en C₁₂-C₂₄.

5. Composition adhésive selon l'une quelconque des revendications précédentes dans laquelle la somme n + n' est égale à 3 à 15.

6. Composition adhésive selon l'une quelconque des revendications précédentes dans laquelle le co- ou terpolymère présente 0,2 à 6 % en poids de soufre chimiquement combiné.

7. Procédé de préparation d'un article adhésif sensible à la pression consistant à appliquer à un substrat un film d'une composition adhésive selon l'une quelconque des revendications précédentes et à en retirer l'eau.

8. Procédé selon la revendication 7, dans lequel le film a une épaisseur de 2,54 à 254 micromètres (0,1 à 10 mil).

9. Procédé selon la revendication 7 ou 8, dans lequel le substrat est choisi parmi le chlorure de polyvinyle plastifié, le mylar, l'acétate de cellulose, le polyéthylène, le polypropylène et le papier.
